# FASCICULE DE BREVET EUROPEEN

(11) **EP 2 807 225 B1**
(45) Date de publication et mention de la délivrance du brevet: **23.05.2018**
(21) Numéro de dépôt: 13701844.6
(22) Date de dépôt: 09.01.2013
(51) Int. Cl.: C09K 5/04, C10M 171/00

(54) **COMPOSITIONS DE TRANSFERT DE CHALEUR PRESENTANT UNE MISCIBILITE AMELIOREE AVEC L'HUILE DE LUBRIFICATION**
WÄRMETRÄGERZUSAMMENSETZUNGEN MIT VERBESSERTER MISCHBARKEIT MIT SCHMIERÖL
HEAT TRANSFER COMPOSITIONS HAVING IMPROVED MISCIBILITY WITH LUBRICATING OIL

(30) Priorité: 26.01.2012 FR 1250762
(43) Date de publication de la demande: 03.12.2014
(73) Titulaire: Arkema France, 92705 Colombes (FR)
(72) Inventeur: BOUSSAND, Béatrice, 69110 Sainte Foy Les Lyon (FR)
(74) Mandataire: Chahine, Audrey Claire
(86) Numéro de dépôt international: PCT/FR2013/050038
(87) Numéro de publication internationale: WO 2013/110867

(56) Documents cités:
- US-A1- 2003 032 563
- US-A1- 2007 004 605
- Christian Puhl: "RefrigerationOils forFuture Mobile A/C Systems", Fuchs Europe Schmierstoffe , 2009, XP002685321, Extrait de l'Internet: URL:http://www.r744.com/assets/link/FUCHS_ Puhl_VDA%20Winter%20Meeting%202009.pdf [extrait le 2012-10-16]

## Description

### DOMAINE DE L'INVENTION

La présente invention concerne des compositions de transfert de chaleur à base de 2,3,3,3-tétrafluoropropène présentant une miscibilité améliorée avec l'huile de lubrification.

### ARRIERE-PLAN TECHNIQUE

Les fluides à base de composés fluorocarbonés sont largement utilisés dans les systèmes de transfert de chaleur par compression de vapeur, notamment les dispositifs de climatisation, de pompe à chaleur, de réfrigération ou de congélation. Ces dispositifs ont en commun de reposer sur un cycle thermodynamique comprenant la vaporisation du fluide à basse pression (dans laquelle le fluide absorbe de la chaleur) ; la compression du fluide vaporisé jusqu'à une pression élevée ; la condensation du fluide vaporisé en liquide à pression élevée (dans laquelle le fluide rejette de la chaleur) ; et la détente du fluide pour terminer le cycle.

Le choix d'un fluide de transfert de chaleur (qui peut être un composé pur ou un mélange de composés) est dicté d'une part par les propriétés thermodynamiques du fluide, et d'autre part par des contraintes supplémentaires. Ainsi, un critère particulièrement important est celui de l'impact du fluide considéré sur l'environnement. En particulier, les composés chlorés (chlorofluorocarbures et hydrochlorofluorocarbures) présentent le désavantage d'endommager la couche d'ozone. On leur préfère donc désormais généralement les composés non chlorés tels que les hydrofluorocarbures, les fluoroéthers et les fluorooléfines.

Une autre contrainte environnementale est celle du potentiel de réchauffement climatique (GWP). Il est donc essentiel de mettre au point des compositions de transfert de chaleur présentant un GWP aussi faible que possible et de bonnes performances énergétiques.

Par ailleurs, pour lubrifier les pièces mobiles du compresseur (ou des compresseurs) d'un système de compression de vapeur, une huile de
lubrification doit être ajoutée au fluide de transfert de chaleur. L'huile peut être de manière générale minérale ou synthétique.

Le choix de l'huile de lubrification est effectué en fonction du type de compresseur, et de manière à ne pas réagir avec le fluide de transfert de chaleur proprement dit et avec les autres composés présents dans le système.

Pour certains systèmes de transfert de chaleur (notamment de petite taille), l'huile de lubrification est généralement autorisée à circuler dans l'ensemble du circuit, la tuyauterie étant conçue de telle sorte que l'huile puisse s'écouler par gravité vers le compresseur. Dans d'autres systèmes de transfert de chaleur (notamment de grande taille), on prévoit un séparateur d'huile immédiatement après le compresseur ainsi qu'un dispositif de gestion de niveau d'huile, assurant un retour de l'huile vers le ou les compresseurs. Même lorsqu'un séparateur d'huile est présent, la tuyauterie du système doit encore être conçue de manière que l'huile puisse revenir par gravité vers le séparateur d'huile ou vers le compresseur.

Les documents US 7,279,451 et US 7,534,366 décrivent des compositions à base de fluorooléfines, par exemple à base de tétrafluoropropène. Diverses huiles de lubrification sont également prévues. Le document rapporte par ailleurs des résultats de compatibilité entre du 1,2,3,3,3-pentafluoropropène (HFO-1225ye), du 1,3,3,3-tétrafluoropropène (HFO-1234ze) ou du 3,3,3-trifluoropropène (HFO-1243zf) et des huiles de lubrification du type polyalkylène glycol. US2003/032563 concerne une huile de lubrification, pour le dioxyde de carbone comme réfrigérant, à base d'un polyalkylène glycol ayant une viscosité cinématique de 3 à 50 mm²/s, et au moins composant choisi parmi un dérivé carbonylé et un ester de polyol, ayant des viscosités cinématiques spécifiques.

Lorsque le ou les composés de transfert de chaleur présentent une mauvaise miscibilité avec l'huile de lubrification, celle-ci a tendance à être piégée au niveau de l'évaporateur et à ne pas retourner au compresseur, ce qui ne permet pas un fonctionnement correct du système.

A cet égard, il existe encore un besoin de mettre au point des compositions de transfert de chaleur à bas GWP (et présentant de bonnes performances énergétiques), dans lesquelles les composés de transfert de chaleur présentent une bonne miscibilité avec l'huile de lubrification.

En particulier, le 2,3,3,3-tétrafluoropropène (HFO-1234yf) est un composé de transfert de chaleur particulièrement intéressant du fait notamment de son bas GWP et de ses bonnes performances énergétiques. En revanche, sa miscibilité avec certaines huiles de lubrification est imparfaite et limite son application. Il est donc souhaitable d'améliorer la miscibilité de compositions à base de HFO-1234yf avec les huiles de lubrification usuelles.

### RESUME DE L'INVENTION

Il est décrit une composition pouvant comprendre du 2,3,3,3-tétrafluoropropène et une huile de lubrification comprenant un polyalkylène glycol et un ester de polyol, la teneur en ester de polyol dans l'huile de lubrification pouvant être inférieure ou égale à 25 %.

La présente invention concerne une composition comprenant du 2,3,3,3-tétrafluoropropène et une huile de lubrification comprenant un polyalkylène glycol et un ester de polyol, la teneur en ester de polyol dans l'huile de lubrification étant de 10% à 25 %.

Il est décrit une teneur en ester de polyol dans l'huile de lubrification pouvant être de 5 à 25 %, de 7 à 20 %, ou de 10 à 15 %.

Selon un mode de réalisation, la teneur en ester de polyol dans l'huile de lubrification est de 10% à 15%.

Selon un mode de réalisation, la composition comprend de 1 à 99 % d'huile de lubrification, de préférence de 5 à 50 %, de manière plus particulièrement préférée de 10 à 40 %, et idéalement de 15 à 35 %.

Selon un mode de réalisation, la composition comprend en outre : un ou plusieurs additifs choisis parmi les composés de transfert de chaleur, les stabilisants, les tensioactifs, les agents traceurs, les agents fluorescents, les agents odorants, les agents de solubilisation et leurs mélanges ; de préférence un ou plusieurs additifs choisis parmi les stabilisants, les tensioactifs, les agents traceurs, les agents fluorescents, les agents odorants, les agents de solubilisation et leurs mélanges.

Selon un mode de réalisation, le 2,3,3,3-tétrafluoropropène est l'unique composé de transfert de chaleur présent.

Il est décrit l'utilisation d'un mélange pouvant comprendre un polyalkylène glycol et un ester de polyol en tant qu'huile de lubrification dans un circuit de compression de vapeur, en association avec un fluide de transfert de chaleur comprenant du 2,3,3,3-tétrafluoropropène, la teneur en ester de polyol dans l'huile de lubrification pouvant être inférieure ou égale à 25 %.

L'invention concerne également l'utilisation d'un mélange comprenant un polyalkylène glycol et un ester de polyol en tant qu'huile de lubrification dans un circuit de compression de vapeur, en association avec un fluide de transfert de chaleur comprenant du 2,3,3,3-tétrafluoropropène, la teneur en ester de polyol dans l'huile de lubrification étant de 10% à 25 %.

Selon un mode de réalisation, le fluide de transfert de chaleur consiste essentiellement, ou de préférence consiste, en le 2,3,3,3-tétrafluoropropène.

Il est décrit une teneur en ester de polyol dans l'huile de lubrification pouvant aller de 5 à 25 %, de 7 à 20 %, ou de 10 à 15 %.

Selon un mode de réalisation, la teneur en ester de polyol dans l'huile de lubrification est de 10% à 15 %.

L'invention concerne également une installation de transfert de chaleur comprenant un circuit de compression de vapeur contenant une composition de transfert de chaleur qui est une composition telle que décrite ci-dessus.

Selon un mode de réalisation, l'installation est choisie parmi les installations mobiles ou stationnaires de chauffage par pompe à chaleur, de climatisation, de réfrigération, de congélation et les cycles de Rankine.

Selon un mode de réalisation, l'installation est une installation de climatisation automobile.

L'invention concerne également un procédé de chauffage ou de refroidissement d'un fluide ou d'un corps au moyen d'un circuit de compression de vapeur contenant un fluide de transfert de chaleur, ledit procédé comprenant successivement l'évaporation au moins partielle du fluide de transfert de chaleur, la compression du fluide de transfert de chaleur, la condensation au moins partielle du fluide de transfert de chaleur et la détente du fluide de transfert de chaleur, dans lequel le fluide de transfert de chaleur est associé à une huile de lubrification pour former une composition de transfert de chaleur, ladite composition de transfert de chaleur étant une composition telle que décrite ci-dessus.

Selon un mode de réalisation, le procédé est un procédé de climatisation mobile ou stationnaire, et de préférence un procédé de climatisation automobile.

L'invention concerne également un procédé de réduction de l'impact environnemental d'une installation de transfert de chaleur comprenant un circuit de compression de vapeur contenant un fluide de transfert de chaleur initial, ledit procédé comprenant une étape de remplacement du fluide de transfert de chaleur initial dans le circuit de compression de vapeur par un fluide de transfert de chaleur final, le fluide de transfert de chaleur final présentant un GWP inférieur au fluide de transfert de chaleur initial, dans lequel le fluide de transfert de chaleur final est associé à une huile de lubrification pour former une composition de transfert de chaleur, ladite composition de transfert de chaleur étant une composition telle que décrite ci-dessus.

Il est décritl'utilisation d'un ester de polyol pour augmenter la miscibilité du 2,3,3,3-tétrafluoropropène avec un polyalkylène glycol.

L'invention concerne également l'utilisation d'un ester de polyol pour augmenter la miscibilité du 2,3,3,3-tétrafluoropropène avec un polyalkylène glycol, à raison de 10% à 25 %, de préférence de 10% à 15 %, par rapport à la quantité totale d'ester de polyol et de polyalkylène glycol.

Il est décrit que l'ester de polyol peut être utilisé à raison de 5 à 25 %, de 7 à 20 %, ou de 10 à 15 %, par rapport à la quantité totale d'ester de polyol et de polyalkylène glycol.

Il est décrit un kit pouvant comprendre :
- un fluide de transfert de chaleur comprenant du 2,3,3,3-tétrafluoropropène d'une part ;
- une huile de lubrification comprenant un polyalkylène glycol et un ester de polyol d'autre part, la teneur en ester de polyol dans l'huile de lubrification pouvant être inférieure ou égale à 25 % ;
pour une utilisation dans une installation de transfert de chaleur comprenant un circuit de compression de vapeur.

L'invention concerne également un kit comprenant :
- un fluide de transfert de chaleur comprenant du 2,3,3,3-tétrafluoropropène d'une part ;
- une huile de lubrification comprenant un polyalkylène glycol et un ester de polyol d'autre part, la teneur en ester de polyol dans l'huile de lubrification étant de 10% à 25 % ;
pour une utilisation dans une installation de transfert de chaleur comprenant un circuit de compression de vapeur.

Il est décrit une teneur en ester de polyol dans l'huile de lubrification pouvant être de 5 à 25 %, de 7 à 20 %, ou de 10 à 15 %.

Selon un mode de réalisation, la teneur en ester de polyol dans l'huile de lubrification est de 10% à 15 %.

Selon un mode de réalisation, le fluide de transfert de chaleur consiste essentiellement, de préférence consiste, en le 2,3,3,3-tétrafluoropropène.

Selon un mode de réalisation, le kit est pour une utilisation dans une installation de climatisation automobile.

La présente invention permet de répondre aux besoins ressentis dans l'état de la technique. Elle fournit plus particulièrement des compositions de transfert de chaleur à bas GWP, présentant de bonnes performances énergétiques, et dans lesquelles les composés de transfert de chaleur présentent une bonne miscibilité avec l'huile de lubrification.

En particulier, l'invention fournit des compositions de transfert de chaleur à base de HFO-1234yf, présentant une miscibilité améliorée avec des huiles de lubrification à base de polyalkylènes glycols.

Cela est accompli en ajoutant un ester de polyol dans l'huile de lubrification. En effet, les présents inventeurs ont constaté que la présence de l'ester de polyol améliore les propriétés de miscibilité du HFO-1234yf avec les polyalkylènes glycols, et ce au-delà de ce que l'on pourrait attendre par une simple extrapolation des propriétés de miscibilité du HFO-1234yf avec le polyalkylène glycol d'une part et avec l'ester de polyol d'autre part. Il y a donc un effet de synergie entre le polyalkylène glycol et l'ester de polyol du point de vue de la miscibilité avec le HFO-1234yf.

Les huiles de type polyalkylène glycol présentent un bon pouvoir lubrifiant, un bas point d'écoulement, une bonne fluidité à basse température, et une bonne compatibilité avec les élastomères généralement présents dans un circuit de compression de vapeur. Elles sont par ailleurs relativement moins coûteuses que d'autres huiles de lubrification et ce sont des huiles dont l'utilisation est actuellement très largement répandue dans certains domaines, et notamment dans le domaine de la climatisation automobile. Il est donc très avantageux d'améliorer la miscibilité du HFO-1234yf avec une huile de lubrification de type polyalkylène glycol, de sorte à pouvoir utiliser dans une plus large mesure ce composé de transfert de chaleur en association avec ce composé lubrifiant.

D'un autre côté, les esters de polyol sont des composés en général moins stables vis-à-vis de l'hydrolyse que les polyalkylènes glycols. Il est donc souhaitable de limiter la quantité d'ester de polyol dans l'huile de lubrification afin d'éviter une dégradation excessive de l'huile, en particulier dans les applications présentant un risque relativement élevé d'entrée d'humidité dans le circuit de compression de vapeur (ce qui est le cas notamment pour la climatisation automobile). Dans ces circonstances, il a été constaté qu'une teneur en ester de polyol dans l'huile de lubrification inférieure ou égale à 25 % constitue le meilleur compromis entre l'amélioration synergique de la miscibilité avec le HFO-1234yf et la stabilité de la composition.

### BREVE DESCRIPTION DES FIGURES

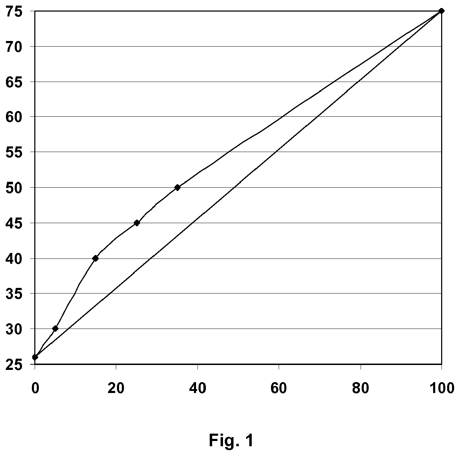

La **figure 1** montre une courbe représentant la température maximale de miscibilité d'un mélange de 75 % de HFO-1234yf et 25 % d'huile de lubrification composée de polyalkylène glycol et d'ester de polyol (en ordonnée, en °C), en fonction la proportion massique d'ester de polyol dans l'huile de lubrification (en abscisse, en %). La droite tracée sur la figure représente le résultat qui serait attendu si la miscibilité du HFO-1234yf avec le polyalkylène glycol et l'ester de polyol se comportait de manière purement additive.

### DESCRIPTION DE MODES DE REALISATION DE L'INVENTION

L'invention est maintenant décrite plus en détail et de façon non limitative dans la description qui suit.

Sauf mention contraire, dans l'ensemble de la demande les proportions de composés indiquées sont données en pourcentages massiques.

Selon la présente demande, le potentiel de réchauffement global (GWP) est défini par rapport au dioxyde de carbone et par rapport à une durée de 100 ans, selon la méthode indiquée dans « The scientific assessment of ozone depletion, 2002, a report of the World Meteorological Association's Global Ozone Research and Monitoring Project ».

Par « composé de transfert de chaleur », respectivement « fluide de transfert de chaleur » (ou fluide frigorigène), on entend un composé, respectivement un fluide, susceptible d'absorber de la chaleur en s'évaporant à basse température et basse pression et de rejeter de la chaleur en se condensant à haute température et haute pression, dans un circuit de compression de vapeur. De manière générale, un fluide de transfert de chaleur peut comprendre un seul, deux, trois ou plus de trois composés de transfert de chaleur.

Par « composition de transfert de chaleur » on entend une composition comprenant un fluide de transfert de chaleur et éventuellement un ou plusieurs additifs qui ne sont pas des composés de transfert de chaleur pour l'application envisagée.

L'invention repose sur l'utilisation d'un composé de transfert de chaleur, à savoir le HFO-1234yf, et d'une huile de lubrification, pour former une composition de transfert de chaleur.

On peut introduire la composition de transfert de chaleur telle quelle dans un circuit de compression de vapeur. Alternativement, on peut introduire séparément dans le circuit d'une part le fluide de transfert de chaleur (comprenant le HFO-1234yf), et d'autre part l'huile de lubrification, au même point du circuit ou non. On peut aussi introduire les composés de transfert de chaleur individuels séparément, s'il y en a plusieurs.

L'huile de lubrification comprend un polyalkylène glycol et un ester de polyol.

Le polyalkylène glycol au sens de l'invention peut comprendre des polyalkylènes glycols de formules différentes en mélange.

L'ester de polyol au sens de l'invention peut comprendre des esters de polyol de formules différentes en mélange.

En général, un polyalkylène glycol approprié pour être utilisé dans le cadre de l'invention comprend de 5 à 50 unités oxyalkylènes répétées, chacune contenant de 1 à 5 atomes de carbone.

Le polyalkylène glycol peut être linéaire ou ramifié. Il peut s'agir d'un homopolymère ou d'un copolymère de 2, 3 ou plus de 3 groupes choisis parmi les groupes oxyéthylène, oxypropylène, oxybutylène, oxypentylène et les combinaisons de ceux-ci.

Des polyalkylènes glycols préférés comprennent au moins 50 % de groupes oxypropylènes.

Des polyalkylènes glycols préférés sont les homopolymères composés de groupements oxypropylènes.

Des polyalkylènes glycols appropriés sont décrits dans le document US 4,971,712. D'autres polyalkylènes glycols appropriés sont les polyalkylènes glycols présentant des groupements hydroxyles à chaque extrémité, tels que décrits dans le document US 4,755,316. D'autres polyalkylènes glycols appropriés sont les polyalkylènes glycols présentant une extrémité hydroxyle coiffée. Le groupement hydroxyle peut être coiffé avec un groupement alkyle contenant de 1 à 10 atomes de carbone (et contenant éventuellement un ou plusieurs hétéroatomes tels que l'azote), ou un groupement fluoroalkyle contenant des hétéroatomes tels que l'azote, ou un groupement fluoroalkyle tel que décrit dans le document US 4,975,212, ou d'autres groupements similaires.

Lorsque les deux extrémités hydroxyles du polyalkylène glycol sont coiffées, on peut utiliser le même groupement extrémal ou une combinaison de deux groupements distincts.

Les groupements hydroxyles terminaux peuvent aussi être coiffés en formant un ester avec un acide carboxylique, tel que cela est décrit dans le document US 5,008,028. L'acide carboxylique peut également être fluoré.

Lorsque les deux extrémités du polyalkylène glycol sont coiffées, l'une ou l'autre peut l'être par un ester, ou bien une extrémité peut être coiffée par un ester et l'autre extrémité être libre ou être coiffée avec l'un des groupements alkyles, hétéroalkyles ou fluoroalkyles susmentionnés.

Des polyalkylènes glycols utilisables en tant qu'huiles de lubrification et disponibles dans le commerce sont par exemple les huiles Goodwrench de General Motors, MOPAR-56 de Daimler-Chrysler, Zerol de Shrieve Chemical Products, Planetelf PAG de Total et Daphne Hermetic PAG d'Itemitsu. D'autres polyalkylènes glycols appropriés sont fabriqués par Dow Chemical et Denso.

La viscosité du polyalkylène glycol peut être par exemple de 1 à 1000 centistokes à 40°C, de préférence de 10 à 200 centistokes à 40°C et de manière plus particulièrement préférée de 30 à 80 centistokes à 40°C.

La viscosité est déterminée selon les grades ISO de viscosité, conformément à la norme ASTM D2422.

L'huile commercialisée par Denso sous le nom ND8, présentant une viscosité de 46 centistokes, est particulièrement appropriée.

Les esters de polyol sont obtenus par réaction d'un polyol (un alcool contenant au moins 2 groupements hydroxyles) avec un acide carboxylique monofonctionnel ou plurifonctionnel ou avec un mélange d'acides carboxyliques monofonctionnels. L'eau formée lors de cette réaction est éliminée pour éviter la réaction inverse d'hydrolyse.

Les polyols préférés pour la synthèse des esters de polyol sont ceux ayant un squelette néopentyle, par exemple le néopentyl glycol, le triméthylol propane, le penta-érythritol et le dipenta-érythritol, le penta-érythritol étant le polyol le plus fréquemment utilisé.

Les acides carboxyliques qui réagissent avec les polyols pour la formation des esters peuvent comprendre de 2 à 15 atomes de carbone, le squelette carboné pouvant être linéaire ou ramifié. Parmi ces acides, on peut notamment citer, de manière non limitative, l'acide n-pentanoïque, l'acide n-hexanoïque, l'acide n-heptanoïque, l'acide n-octanoïque, l'acide 2-éthylhexanoïque, l'acide 2,2-diméthylpentanoïque, l'acide 3,5,5-triméthylhexanoïque, l'acide adipique, l'acide succinique, et autres, ainsi que les mélanges de deux ou plusieurs de ces acides, en toutes proportions.

Certaines fonctions alcool ne sont pas estérifiées, cependant leur proportion reste faible. Ainsi, les esters de polyol peuvent comprendre de 0 à 5 % molaire relatif de motifs -CH₂-OH par rapport aux motifs -CH₂-O-(C=O)-.

Les esters de polyol préférés sont ceux ayant une viscosité de 1 centistokes à 1000 centistokes à 40°C, de préférence de 10 centistokes à 200 centistokes, et avantageusement de 30 centistokes à 80 centistokes.

À titre d'esters de polyol appropriés, on peut par exemple citer, à titre non limitatif, les huiles Mobil EAL Arctic 68 et 32 (Mobil), Planetelf ACD 32 (Total) et Bitzer BSE 32 (Bitzer).

La proportion d'huile de lubrification devant être utilisée en combinaison avec le fluide de transfert de chaleur dépend du type d'installation concernée. En effet, la quantité totale d'huile de lubrification dans l'installation dépend principalement de la nature du compresseur, tandis que la quantité totale de fluide de transfert de chaleur dans l'installation dépend principalement des échangeurs et de la tuyauterie.

En général, la proportion d'huile de lubrification dans la composition de transfert de chaleur, ou autrement dit par rapport à la somme de l'huile de lubrification et du fluide de transfert de chaleur, est de 1 à 99 %, de préférence de 5 à 50 %, par exemple de 10 à 40 % ou de 15 à 35 %.

L'huile de lubrification utilisée dans le cadre de l'invention comprend une proportion d'ester de polyol inférieure ou égale à 25 %.

Selon certains modes de réalisation, l'huile de lubrification comprend au moins 1 %, ou au moins 2 %, ou au moins 3 %, ou au moins 4 %, ou au moins 5 %, ou au moins 6 %, ou au moins 7 %, ou au moins 8 %, ou au moins 9 %, ou au moins 10 %, ou au moins 11 %, ou au moins 12 %, ou au moins 13 %, ou au moins 14 %, ou au moins 15 %, ou au moins 16 %, ou au moins 17 %, ou au moins 18 %, ou au moins 19 %, ou au moins 20 %, ou au moins 21 %, ou au moins 22 %, ou au moins 23 %, ou au moins 24 % d'ester de polyol. Plus la proportion d'ester de polyol dans l'huile de lubrification est élevée, meilleure est la miscibilité avec le fluide de transfert de chaleur à base de HFO-1234yf.

Selon certains modes de réalisation, l'huile de lubrification comprend au plus 1 %, ou au plus 2 %, ou au plus 3 %, ou au plus 4 %, ou au plus 5 %, ou au plus 6 %, ou au plus 7 %, ou au plus 8 %, ou au plus 9 %, ou au plus 10 %, ou au plus 11 %, ou au plus 12 %, ou au plus 13 %, ou au plus 14 %, ou au plus 15 %, ou au plus 16 %, ou au plus 17 %, ou au plus 18 %, ou au plus 19 %, ou au plus 20 %, ou au plus 21 %, ou au plus 22 %, ou au plus 23 %, ou au plus 24 % d'ester de polyol. Plus la proportion d'ester de polyol dans l'huile de lubrification est faible, meilleure est la stabilité de l'huile de lubrification.

Selon un mode de réalisation particulier, l'huile de lubrification utilisée consiste en le mélange de polyalkylène glycol et d'ester de polyol décrit ci-dessus, à l'exception de tout autre composé lubrifiant.

Selon un mode de réalisation alternatif, un autre composé lubrifiant est utilisé en combinaison avec le polyalkylène glycol, dans l'huile de lubrification. Il peut notamment être choisi parmi les huiles d'origine minérale, les huiles de silicone, les paraffines d'origine naturelle, les naphtènes, les paraffines synthétiques, les alkylbenzènes, les poly-alpha oléfines, les polyvinyléthers. Les polyvinyléthers sont préférés. Lorsqu'un autre composé lubrifiant est utilisé en combinaison avec le polyalkylène glycol, il est souhaitable que la miscibilité du HFO-1234yf avec ce composé lubrifiant soit supérieure à la miscibilité du HFO-1234yf avec le polyalkylène glycol. C'est le cas notamment pour au moins une partie des composés de type polyvinyléther.

Le composé de transfert de chaleur principalement utilisé dans le cadre de la présente invention est le HFO-1234yf.

Toutefois, les compositions de transfert de chaleur selon l'invention peuvent éventuellement comprendre un ou plusieurs composés de transfert de chaleur supplémentaires, outre le HFO-1234yf. Ces composés de transfert de chaleur supplémentaires peuvent être notamment choisis parmi les hydrocarbures, les hydrofluorocarbures, les éthers, les hydrofluoroéthers et les fluorooléfines.

Selon des modes de réalisation particuliers, les fluides de transfert de chaleur selon l'invention peuvent être des compositions binaires (consistant en deux composés de transfert de chaleur) ou ternaires (consistant en trois composés de transfert de chaleur) ou quaternaires (consistant en quatre composés de transfert de chaleur), en association avec l'huile de lubrification pour former les compositions de transfert de chaleur selon l'invention.

Il est toutefois préféré que le fluide de transfert de chaleur présent dans la composition de transfert de chaleur selon l'invention consiste essentiellement en, voire consiste en, le HFO-1234yf. Alternativement, la proportion de HFO-1234yf dans le fluide de transfert de chaleur (c'est-à-dire par rapport à la somme des composés de transfert de chaleur) est de préférence supérieure ou égale à 30 %, ou 40 %, ou 50 %, ou 60 %, ou 70 %, ou 80 %, ou 90 %, ou 95 %.

Les autres additifs pouvant être utilisés dans le cadre de l'invention peuvent notamment être choisis parmi les stabilisants, les tensioactifs, les agents traceurs, les agents fluorescents, les agents odorants et les agents de solubilisation.

Le ou les stabilisants, lorsqu'ils sont présents, représentent de préférence au plus 5 % en masse dans la composition de transfert de chaleur. Parmi les stabilisants, on peut citer notamment le nitrométhane, l'acide ascorbique, l'acide téréphtalique, les azoles tels que le tolutriazole ou le benzotriazole, les composés phénoliques tels que le tocophérol, l'hydroquinone, le t-butyl hydroquinone, le 2,6-di-ter-butyl-4-méthylphénol, l'acide 3-(3,5-diter-butyl-4-hydroxyphényl)propionique, les époxydes (alkyl éventuellement fluoré ou perfluoré ou alkényl ou aromatique) tels que les n-butylglycidyl éther, hexanedioldiglycidyl éther, allylglycidyl éther, butylphénylglycidyl éther, les phosphites, les phosphates tels que les tricrésyl phosphates, les thiols et les lactones.

A titre d'agents traceurs (susceptibles d'être détectés) on peut citer les hydrofluorocarbures deutérés ou non, les hydrocarbures deutérés, les perfluorocarbures, les fluoroéthers, les composés bromés, les composés iodés, les alcools, les aldéhydes, les cétones, le protoxyde d'azote et les combinaisons de ceux-ci. L'agent traceur est différent du ou des composés de transfert de chaleur composant le fluide de transfert de chaleur.

A titre d'agents de solubilisation, on peut citer les hydrocarbures, le diméthyléther, les polyoxyalkylène éthers, les amides, les cétones, les nitriles, les chlorocarbures, les esters, les lactones, les aryl éthers, les fluoroéthers et les 1,1,1-trifluoroalcanes. L'agent de solubilisation est différent du ou des composés de transfert de chaleur composant le fluide de transfert de chaleur.

A titre d'agents fluorescents, on peut citer les naphthalimides, les perylènes, les coumarines, les anthracènes, les phénanthracènes, les xanthènes, les thioxanthènes, les naphthoxanhtènes, les fluorescéines et les dérivés et combinaisons de ceux-ci.

A titre d'agents odorants, on peut citer les alkylacrylates, les allylacrylates, les acides acryliques, les acrylesters, les alkyléthers, les alkylesters, les alcynes, les aldéhydes, les thiols, les thioéthers, les disulfures, les allylisothiocyanates, les acides alcanoïques, les aminés, les norbornènes, les dérivés de norbornènes, le cyclohexène, les composés aromatiques hétérocycliques, l'ascaridole, l'o-méthoxy(méthyl)-phénol et les combinaisons de ceux-ci.

Le procédé de transfert de chaleur selon l'invention repose sur l'utilisation d'une installation comprenant un circuit de compression de vapeur qui contient une composition de transfert de chaleur (à savoir un fluide de transfert de chaleur et au moins une huile de lubrification). Le procédé de transfert de chaleur peut être un procédé de chauffage ou de refroidissement d'un fluide ou d'un corps.

Le circuit de compression de vapeur comprend au moins un évaporateur, un compresseur, un condenseur et un détendeur, ainsi que des lignes de transport de fluide entre ces éléments. L'évaporateur et le condenseur comprennent un échangeur de chaleur permettant un échange de chaleur entre le fluide de transfert de chaleur et un autre fluide ou corps.

A titre de compresseur, on peut utiliser notamment un compresseur centrifuge à un ou plusieurs étages ou un mini-compresseur centrifuge. Les compresseurs rotatifs, à piston ou à vis peuvent aussi être utilisés. Le compresseur peut être entraîné par un moteur électrique ou par une turbine à gaz (par exemple alimentée par les gaz d'échappement d'un véhicule, pour les applications mobiles) ou par engrenage.

L'installation peut comprendre une turbine pour générer de l'électricité (cycle de Rankine).

L'installation peut également éventuellement comprendre au moins un circuit de fluide caloporteur utilisé pour transmettre la chaleur (avec ou sans changement d'état) entre le circuit de fluide de transfert de chaleur et le fluide ou corps à chauffer ou refroidir.

L'installation peut également éventuellement comprendre deux circuits de compression de vapeur (ou plus), contenant des fluides de transfert de chaleur identiques ou distincts. Par exemple, les circuits de compression de vapeur peuvent être couplés entre eux.

Le circuit de compression de vapeur fonctionne selon un cycle classique de compression de vapeur. Le cycle comprend le changement d'état du fluide de transfert de chaleur d'une phase liquide (ou diphasique liquide / vapeur) vers une phase vapeur à une pression relativement faible, puis la compression du fluide en phase vapeur jusqu'à une pression relativement élevée, le changement d'état (condensation) du fluide de transfert de chaleur de la phase vapeur vers la phase liquide à une pression relativement élevée, et la réduction de la pression pour recommencer le cycle.

Dans le cas d'un procédé de refroidissement, de la chaleur issue du fluide ou du corps que l'on refroidit (directement ou indirectement, via un fluide caloporteur) est absorbée par le fluide de transfert de chaleur, lors de l'évaporation de ce dernier, et ce à une température relativement faible par rapport à l'environnement. Les procédés de refroidissement comprennent les procédés de climatisation (avec des installations mobiles, par exemple dans des véhicules, ou stationnaires), de réfrigération et de congélation ou de cryogénie.

Dans le cas d'un procédé de chauffage, de la chaleur est cédée (directement ou indirectement, via un fluide caloporteur) du fluide de transfert de chaleur, lors de la condensation de celui-ci, au fluide ou au corps que l'on chauffe, et ce à une température relativement élevée par rapport à l'environnement. L'installation permettant de mettre en oeuvre le transfert de chaleur est appelée dans ce cas « pompe à chaleur ».

Il est possible d'utiliser tout type d'échangeur de chaleur pour la mise en oeuvre des fluides de transfert de chaleur selon l'invention, et notamment des échangeurs de chaleur à co-courant ou, de préférence, des échangeurs de chaleur à contre-courant. Il est également possible d'utiliser des échangeurs à micro-canaux.

L'invention est particulièrement adaptée à la mise en oeuvre des procédés de climatisation dans des installations mobiles ou stationnaires, et plus particulièrement de climatisation automobile.

De préférence, et notamment dans le cadre des procédés de climatisation automobile, la température d'entrée du fluide de transfert de chaleur à l'évaporateur est de -10°C à 20°C, notamment de -0°C à 10°C, de manière plus particulièrement préférée d'environ 5°C.

De préférence, et notamment dans le cadre des procédés de climatisation automobile, la température du début de la condensation du fluide de transfert de chaleur au condenseur est de 25°C à 60°C, notamment de 30°C à 50°C, de manière plus particulièrement préférée de 35°C à 45°C, et par exemple d'environ 40°C.

Il faut noter que l'ajout d'un ester de polyol dans une composition de transfert de chaleur comprenant (ou consistant en) du HFO-1234yf en tant que fluide de transfert de chaleur, ainsi qu'une huile de lubrification comprenant (ou consistant en) du polyalkylène glycol, améliore la miscibilité du fluide de transfert de chaleur avec l'huile de lubrification, c'est-à-dire augmente la température seuil d'apparition de la zone de non-miscibilité (définie comme étant la température à partir laquelle les composés en phase liquide forment une émulsion). Cela permet d'accroître les possibilités d'utilisation du fluide de transfert de chaleur, par exemple en rendant possible une utilisation à une température de condensation plus élevée.

Plus généralement, l'invention permet de procéder au remplacement de tout fluide de transfert de chaleur dans toutes les applications de transfert de chaleur, et par exemple dans la climatisation automobile. Par exemple, les fluides de transfert de chaleur et compositions de transfert de chaleur selon l'invention peuvent servir à remplacer :
- le 1,1,1,2-tétrafluoroéthane (R134a) ;
- le 1,1-difluoroéthane (R152a) ;
- le 1,1,1,3,3-pentafluoropropane (R245fa) ;
- les mélanges de pentafluoroéthane (R125), de 1,1,1,2-tétrafluoroéthane (R134a) et d'isobutane (R600a), à savoir les R422 ;
- le chlorodifluorométhane (R22) ;
- le mélange de 51,2 % de chloropentafluoroéthane (R115) et de 48,8 % de chlorodifluorométhane (R22), à savoir le R502 ;
- tout hydrocarbure ;
- le mélange de 20 % de difluorométhane (R32), de 40 % de pentafluoroéthane (R125) et de 40 % de 1,1,1,2-tétrafluoroéthane (R134a), à savoir le R407A ;
- le mélange de 23 % de difluorométhane (R32), de 25 % de pentafluoroéthane (R125) et de 52 % de 1,1,1,2-tétrafluoroéthane (R134a), à savoir le R407C ;
- le mélange de 30 % de difluorométhane (R32), de 30 % de pentafluoroéthane (R125) et de 40 % de 1,1,1,2-tétrafluoroéthane (R134a), à savoir le R407F ;
- le R1234ze (1,3,3,3-tétrafluoropropène).

### EXEMPLES

Les exemples suivants illustrent l'invention sans la limiter.

### Exemple 1 - Miscibilité du HFO-1234yf avec l'huile de lubrification

Dans cet exemple on étudie la miscibilité du HFO-1234yf avec une huile de lubrification à base de polyalkylène glycol et / ou d'ester de polyol.

Le polyalkylène glycol est l'huile PAG ND8 fournie par Nippon Denso.

L'ester de polyol est l'huile POE Ze-GLES RB68 fournie par Nippon Oil.

Le mode opératoire est le suivant :
- Introduction de l'huile de lubrification dans un tube en verre de 16,4 ml (tube à sceller) en pesant exactement la quantité introduite.
- Ajout de la quantité voulue de fluide frigorigène (composé de transfert de chaleur).
- Fermeture du tube en le soudant.
- Immersion complète du tube dans un bain thermostaté rempli d'eau à température ambiante. La cuve utilisée est en plexiglas, ce qui permet de visualiser le mélange fluide / huile. Les tubes sont disposés verticalement dans des porte-tubes.
- Fermeture du dessus de la cuve par des plaques métalliques de manière à être protégé en cas de casse d'un tube.
- Chauffage progressif de l'eau et observation de la température à partir de laquelle le mélange devient bi-phasique. La température maximale afin de ne pas atteindre des pressions trop élevées est de 80°C. La température est tout d'abord augmentée de 5°C en 5°C avec un palier de 10 minutes à chaque fois, puis lorsque la température à laquelle le mélange devient non-miscible est atteinte, la température est modifiée par variations de 1°C.

L'obtention d'une émulsion signale la non-miscibilité du mélange.

La **figure 1** illustre l'amélioration surprenante de la miscibilité du polyalkylène glycol avec le HFO-1234yf qui est obtenu par l'ajout d'ester de polyol, la température maximale de miscibilité réelle (courbe) étant supérieure à la température maximale de miscibilité théorique (droite) extrapolée en fonction de la température maximale de miscibilité du polyalkylène glycol pur et de l'ester de polyol pur. Cette figure a été obtenue à partir des mélanges HFO-1234yf / huile de lubrification contenant 25 % d'huile de lubrification. La zone de non-miscibilité correspond au domaine situé au-dessus de la courbe, et la zone de miscibilité correspond au domaine situé en-dessous de la courbe.

Un ajout de 15 à 25 % d'ester de polyol par exemple permet d'étendre la zone de miscibilité d'environ 7 à 8 degrés par rapport à la valeur attendue.

### Exemple 2 - Stabilité thermique de l'huile de lubrification

Dans cet exemple on étudie la stabilité thermique des huiles de lubrification utilisées dans l'exemple 1.

Les essais sont effectués selon la norme ASHRAE 97-2007.

Les conditions de test sont les suivantes :
- masse de lubrifiant : 5 g ;
- température : 200°C ;
- durée : 14 jours.

Les essais ont été effectués en ajoutant 5000 ppm d'eau dans l'huile de lubrification, ce qui est considéré comme étant une teneur en eau relativement élevée.

L'huile de lubrification est introduite dans un tube en verre de 16,4 mL. Le tube est ensuite tiré sous vide puis soudé pour le fermer et placé dans une étuve à 200°C pendant 14 jours.

En fin d'essai, les huiles sont analysées :
- du point de vue de leur couleur, par spectrocolorimetrie (pour une faible coloration les résultats sont donnés en Hazen, jusqu'à 700 et pour une forte coloration les résultats sont donnés en Gardner, de 3 à 15) ;
- du point de vue de la teneur en eau (mesure de coulométrie Karl Fischer) ;
- du point de vue de l'indice d'acide (Total Acid Number ou TAN, titration avec du KOH méthanolique à 0,01 N).

Les résultats sont résumés dans le tableau ci-dessous :

| Huile | 100 % PAG | 15% POE | 35 % POE | 55 % POE | 80 % POE | 100 % POE |
|---|---|---|---|---|---|---|
| | | 85 % PAG | 65 % PAG | 45 % PAG | 20 % PAG | |
| Couleur | 5.2 Gardner | 4.2 Gardner | 325 Hazen | 320 Hazen | 330 Hazen | 110 Hazen |
| Teneur en eau (ppm) | 5300 | 4900 | 4300 | 4900 | 4500 | 5000 |
| Indice d'acide (mg KOH / g) | 4,7 | 8,8 | 16,2 | 14,8 | 13,1 | 12,3 |

On constate qu'afin de conserver une stabilité thermique satisfaisante, la teneur en ester de polyol dans l'huile doit être maintenue inférieure ou égale à 25 % environ, notamment inférieure ou égale à 20 % environ, et idéalement inférieure ou égale à 15 %.

## Revendications

1. Composition comprenant du 2,3,3,3-tétrafluoropropène et une huile de lubrification comprenant un polyalkylène glycol et un ester de polyol, la teneur en ester de polyol dans l'huile de lubrification étant de 10 à 25%.

2. Composition selon la revendication 1, comprenant de 1 à 99 % d'huile de lubrification, de préférence de 5 à 50 %, de manière plus particulièrement préférée de 10 à 40 %, et idéalement de 15 à 35 %.

3. Composition selon l'une des revendications 1 à 2, comprenant en outre : un ou plusieurs additifs choisis parmi les composés de transfert de chaleur, les stabilisants, les tensioactifs, les agents traceurs, les agents fluorescents, les agents odorants, les agents de solubilisation et leurs mélanges ; de préférence un ou plusieurs additifs choisis parmi les stabilisants, les tensioactifs, les agents traceurs, les agents fluorescents, les agents odorants, les agents de solubilisation et leurs mélanges.

4. Composition selon l'une des revendications 1 à 3, dans laquelle le 2,3,3,3-tétrafluoropropène est l'unique composé de transfert de chaleur présent.

5. Utilisation d'un mélange comprenant un polyalkylène glycol et un ester de polyol en tant qu'huile de lubrification dans un circuit de compression de vapeur, en association avec un fluide de transfert de chaleur comprenant du 2,3,3,3-tétrafluoropropène, de préférence consiste essentiellement, ou avantageusement consiste en le 2,3,3,3-tétrafluoropropène, la teneur en ester de polyol dans l'huile de lubrification étant de 10 à 25%.

6. Installation de transfert de chaleur comprenant un circuit de compression de vapeur contenant une composition de transfert de chaleur qui est une composition selon l'une des revendications 1 à 4.

7. Installation selon la revendication 6, choisie parmi les installations mobiles ou stationnaires de chauffage par pompe à chaleur, de climatisation, de réfrigération, de congélation et les cycles de Rankine.

8. Installation selon la revendication 6, qui est une installation de climatisation automobile.

9. Procédé de chauffage ou de refroidissement d'un fluide ou d'un corps au moyen d'un circuit de compression de vapeur contenant un fluide de transfert de chaleur, ledit procédé comprenant successivement l'évaporation au moins partielle du fluide de transfert de chaleur, la compression du fluide de transfert de chaleur, la condensation au moins partielle du fluide de transfert de chaleur et la détente du fluide de transfert de chaleur, dans lequel le fluide de transfert de chaleur est associé à une huile de lubrification pour former une composition de transfert de chaleur, ladite composition de transfert de chaleur étant une composition selon l'une des revendications 1 à 4.

10. Procédé selon la revendication 9 qui est un procédé de climatisation mobile ou stationnaire, et de préférence un procédé de climatisation automobile.

11. Procédé de réduction de l'impact environnemental d'une installation de transfert de chaleur comprenant un circuit de compression de vapeur contenant un fluide de transfert de chaleur initial, ledit procédé comprenant une étape de remplacement du fluide de transfert de chaleur initial dans le circuit de compression de vapeur par un fluide de transfert de chaleur final, le fluide de transfert de chaleur final présentant un GWP inférieur au fluide de transfert de chaleur initial, dans lequel le fluide de transfert de chaleur final est associé à une huile de lubrification pour former une composition de transfert de chaleur, ladite composition de transfert de chaleur étant une composition selon l'une des revendications 1 à 4.

12. Utilisation d'un ester de polyol pour augmenter la miscibilité du 2,3,3,3-tétrafluoropropène avec un polyalkylène glycol, à raison de 10 à 25% par rapport à la quantité totale d'ester de polyol et de polyalkylène glycol.

13. Kit comprenant :
- un fluide de transfert de chaleur comprenant du 2,3,3,3-tétrafluoropropène d'une part ;
- une huile de lubrification comprenant un polyalkylène glycol et un ester de polyol d'autre part, la teneur en ester de polyol dans l'huile de lubrification étant de 10 à 25%;
pour une utilisation dans une installation de transfert de chaleur comprenant un circuit de compression de vapeur.

14. Kit selon la revendication 13, dans lequel le fluide de transfert de chaleur consiste essentiellement, de préférence consiste, en le 2,3,3,3-tétrafluoropropène.

15. Kit selon l'une quelconque des revendications 13 ou 14, pour une utilisation dans une installation de climatisation automobile.

## Patentansprüche

1. Zusammensetzung, umfassend 2,3,3,3-Tetrafluorpropen und ein Schmieröl, umfassend ein Polyalkylenglykol und einen Polyolester, wobei der Gehalt an Polyolester in dem Schmieröl 10 bis 25% ist.

2. Zusammensetzung nach Anspruch 1, umfassend 1 bis 99%, vorzugsweise 5 bis 50%, stärker bevorzugt 10 bis 40% und idealerweise 15 bis 35% Schmieröl.

3. Zusammensetzung gemäß einem der Ansprüche 1 bis 2, umfassend unter anderem: ein oder mehrere Additive, ausgewählt aus Wärmeübertragungsverbindungen, Stabilisatoren, Tensiden, Tracermitteln, Fluoreszenzmitteln, Geruchsstoffen, Lösungsvermittlern und Gemischen davon; vorzugsweise ein oder mehrere Additive, ausgewählt aus Stabilisatoren, Tensiden, Tracermitteln, Fluoreszenzmitteln, Geruchsstoffen, Lösungsvermittlern und Gemischen davon.

4. Zusammensetzung gemäß einem der Ansprüche 1 bis 3, in welcher 2,3,3,3-Tetrafluorpropen die einzige vorhandene Wärmeübertragungsverbindung ist.

5. Verwendung einer Mischung, umfassend ein Polyalkylenglykol und einen Polyolester als ein Schmieröl in einem Dampfkompressionskreis, in Kombination mit einem 2,3,3,3-Tetrafluorpropen umfassenden Wärmeübertragungsfluid, vorzugsweise im Wesentlichen bestehend aus oder vorteilhafterweise bestehend aus 2,3,3,3-Tetrafluorpropen, wobei der Gehalt des Polyolesters in dem Schmieröl 10 bis 25% ist.

6. Wärmeübertragungsanlage, die einen Dampfkompressionskreis umfasst, der eine Wärmeübertragungszusammensetzung enthält, die eine Zusammensetzung gemäß einem der Ansprüche 1 bis 4 ist.

7. Anlage gemäß Anspruch 6, ausgewählt aus mobilen oder stationären Wärmepumpen-, Klima-, Kühl-, Gefrier- und Rankine-Zyklen-Heizanlagen.

8. Anlage gemäß Anspruch 6, bei der es sich um eine Kraftfahrzeug-Klimaanlage handelt.

9. Verfahren zum Heizen oder Kühlen eines Fluids oder eines Körpers mittels eines Dampfkompressionskreises, der ein Wärmeübertragungsfluid enthält, wobei das Verfahren aufeinanderfolgend zumindest teilweises Verdampfen des Wärmeübertragungsfluids, Komprimieren des Wärmeübertragungsfluids, zumindest teilweises Kondensieren des Wärmeübertragungsfluids und Entspannen des Wärmeübertragungsfluids umfasst, wobei das Wärmeübertragungsfluid mit einem Schmieröl assoziiert ist, um eine Wärmeübertragungszusammensetzung zu bilden, wobei die Wärmeübertragungszusammensetzung eine Zusammensetzung gemäß einem der Ansprüche 1 bis 4 ist.

10. Verfahren gemäß Anspruch 9, das ein mobiles oder stationäres Klimatisierungsverfahren und vorzugsweise ein Kraftfahrzeug-Klimatisierungsverfahren ist.

11. Verfahren für Verringerung der Umweltauswirkung einer Wärmeübertragungsanlage, umfassend einen Dampfkompressionskreis, der ein Anfangs-Wärmeübertragungsfluid enthält, wobei das Verfahren einen Schritt des Ersetzens des Anfangs-Wärmeübertragungsfluids in dem Dampfkompressionskreis durch ein End-Wärmeübertragungsfluid umfasst, wobei das End-Wärmeübertragungsfluid einen niedrigeren GWP als das Anfangs-Wärmeübertragungsfluid präsentiert, wobei das End-Wärmeübertragungsfluid mit einem Schmieröl assoziiert ist, um eine Wärmeübertragungszusammensetzung zu bilden, wobei die Wärmeübertragungszusammensetzung eine Zusammensetzung gemäß einem der Ansprüche 1 bis 4 ist.

12. Verwendung eines Polyolesters zur Erhöhung der Mischbarkeit von 2,3,3,3-Tetrafluorpropen mit einem Polyalkylenglykol, in einem Anteil von 10 bis 25%, bezogen auf die Gesamtmenge an Polyolester und Polyalkylenglykol.

13. Kit, das Folgendes umfasst:
- ein Wärmeübertragungsfluid, das einerseits 2,3,3,3-Tetrafluorpropen umfasst;
- ein Schmieröl, das andererseits ein Polyalkylenglykol und einen Polyolester umfasst, wobei der Gehalt an Polyolester in dem Schmieröl 10 bis 25% ist;
für eine Verwendung in einer Wärmeübertragungsanlage, die einen Dampfkompressionskreis umfasst.

14. Kit gemäß Anspruch 13, wobei das Wärmeübertragungsfluid im Wesentlichen aus 2,3,3,3-Tetrafluorpropen besteht oder vorzugsweise daraus besteht.

15. Kit gemäß einem beliebigen der Ansprüche 13 oder 14 zur Verwendung in einer Kraftfahrzeug-Klimaanlage.

## Claims

1. Composition comprising 2,3,3,3-tetrafluoropropene and a lubricating oil comprising a polyalkylene glycol and a polyol ester, the content of polyol ester in the lubricating oil being from 10% to 25%.

2. Composition according to Claim 1, comprising from 1% to 99% of lubricating oil, preferably from 5% to 50%, more particularly preferably from 10% to 40% and ideally from 15% to 35%.

3. Composition according to either of Claims 1 and 2, additionally comprising: one or more additives chosen from heat-transfer compounds, stabilizing agents, surfactants, tracers, fluorescent agents, odorous agents, solubilizing agents and their mixtures; preferably, one or more additives chosen from stabilizing agents, surfactants, tracers, fluorescent agents, odorous agents, solubilizing agents and their mixtures.

4. Composition according to one of Claims 1 to 3, in which the 2,3,3,3-tetrafluoropropene is the only heat-transfer compound present.

5. Use of a mixture comprising a polyalkylene glycol and a polyol ester as lubricating oil in a vapour compression circuit, in combination with a heat-transfer fluid comprising 2,3,3,3-tetrafluoropropene, which preferably consists essentially or advantageously consists of 2,3,3,3-tetrafluoropropene, the content of polyol ester in the lubricating oil being from 10% to 25%.

6. Heat-transfer installation comprising a vapour compression circuit containing a heat-transfer composition which is a composition according to one of Claims 1 to 4.

7. Installation according to Claim 6, chosen from mobile or stationary installations for heat-pump heating, air conditioning, refrigeration or freezing and Rankine cycles.

8. Installation according to Claim 6, which is a motor vehicle air conditioning installation.

9. Process for heating or cooling a fluid or a body by means of a vapour compression circuit containing a heat-transfer fluid, the said process successively comprising the at least partial evaporation of the heat-transfer fluid, the compression of the heat-transfer fluid, the at least partial condensation of the heat-transfer fluid and the reduction in pressure of the heat-transfer fluid, in which the heat-transfer fluid is combined with a lubricating oil in order to form a heat-transfer composition, the said heat-transfer composition being a composition according to one of Claims 1 to 4.

10. Process according to Claim 9, which is a mobile or stationary air conditioning process and preferably a motor vehicle air conditioning process.

11. Process for reducing the environmental impact of a heat-transfer installation comprising a vapour compression circuit containing an initial heat-transfer fluid, the said process comprising a stage of replacement of the initial heat-transfer fluid in the vapour compression circuit by a final heat-transfer fluid, the final heat-transfer fluid exhibiting a lower GWP than the initial heat-transfer fluid, in which the final heat-transfer fluid is combined with a lubricating oil in order to form a heat-transfer composition, the said heat-transfer composition being a composition according to one of Claims 1 to 4.

12. Use of a polyol ester for increasing the miscibility of 2,3,3,3-tetrafluoropropene with a polyalkylene glycol, in a proportion of 10% to 25%, with respect to the total amount of polyol ester and of polyalkylene glycol.

13. Kit comprising:
- a heat-transfer fluid comprising 2,3,3,3-tetrafluoropropene, on the one hand;
- a lubricating oil comprising a polyalkylene glycol and a polyol ester, on the other hand, the content of polyol ester in the lubricating oil being from 10% to 25%;
for use in a heat-transfer installation comprising a vapour compression circuit.

14. Kit according to Claim 13, in which the heat-transfer fluid consists essentially, preferably consists, of 2,3,3,3-tetrafluoropropene.

15. Kit according to either one of Claims 13 and 14, for use in a motor vehicle air conditioning installation.
